# EUROPEAN PATENT SPECIFICATION

(11) **EP 2 722 143 B1**
(45) Date of publication and mention of the grant of the patent: **19.10.2016**
(21) Application number: 12290361.0
(22) Date of filing: 22.10.2012
(51) Int. Cl.: B28B 1/52, B22F 3/18, B22F 5/00, B22F 7/02, B28B 3/12, B28B 3/16, B32B 18/00, B30B 3/04, B30B 11/18, C04B 33/13, C04B 35/111, C04B 35/622, C04B 35/626

(54) **Process for making inorganic sheet**
Verfahren zur Herstellung anorganischer Plättchen
Procédé de fabrication de feuille inorganique

(43) Date of publication of application: 23.04.2014
(73) Proprietor: Imerys Ceramics France, 75007 Paris (FR)
(72) Inventor: Zhang, Wen, 87100 Limoges (FR); Gasgnier, Gilles, 87170 Isle (FR); Sevagen, Alexandre, 87000 Limoges (FR)
(74) Representative: Johnston, Magnus George

(56) References cited:
- EP-A1- 0 554 820
- EP-A1- 2 455 353
- GB-A- 1 013 170
- US-A- 1 977 699
- US-A- 2 917 821
- US-A- 5 709 913

## Description

The present application is directed to a method for making a sintered ceramic sheet.

### BACKGROUND OF THE INVENTION

Traditional methods to shape inorganic bodies especially ceramics include slip casting, extrusion and pressing. However, the as formed green bodies are often fragile and difficult to handle. Consequently, these methods are not suitable to form large size inorganic sheet. Additionally, it is complicated using traditional methods to form a body having a variable composition which may offer interesting properties such as colour, porosity and mechanical strength.

For example, a paper-making method has been adapted for the shaping of ceramic materials as well as laminates, as described in, for example, EP-A-0554820, WO-A-9406728 and US-B-7597781. In such processes, a papermaking suspension comprising fibres, ceramic powders, retention aids, and binder is transferred to the paper machine, where a continuous sheet of paper is then formed by dewatering and drying. However, there are disadvantages: i) it requires very low solid loading slurries (<2%); (ii) lengthy preliminary studies are necessary to determine dispersion-flocculation characteristics of slurries for different ceramic compositions; iii) a large quantity of waste water is generated; iii) the high quantity of organics such as fibres added can result in a very porous ceramic after firing; and iv) the thickness of an as produced single layer is often limited (i.e., < 2mm).

Tape casting has also been used to prepared ceramic thin layers, such as described in WO-A-0302167, US-A-4329271 and FR-B-2818015. In this method, ceramic powder, binder/plasticizer and other additives are mixed in a solvent to produce a slurry. The slurry is then flowed out continuously from a gap between a doctor blade and a carrier film which moves at a given speed. After that, the slurry is dried and separated from the carrier film to produce a ceramic sheet. Using this method it is possible to produce ceramic layers with a thickness down to a few of microns. However, it is difficult to maintain the thickness of a slurry and to inhibit sedimentation during drying. Therefore, a thick sheet (>1-2 mm) cannot be easily moulded from a slurry by tape casting. Other disadvantages are the relatively high amounts of organics such as binder, plasticizer and/or solvent required in the process. This poses both economical and environmental problems.

Extrusion methods consist of extruding a mouldable mixture into a sheet through a screw or ram extruder. However, it is difficult to obtain relatively large sheets and thin layers without wrinkles. US-A-7090480 proposes to precisely control the temperature of the die area in order to produce a relatively flat ceramic sheet. EP-A-1726419 describes a combined system of a twin screw extruder with a single screw extruder for producing ceramic sheet. Other methods to produce thin ceramic layers are to cut an extruded cylinder into board and then compact it into a sheet of desired thickness by rolling as described in US-A-6399013, or to directly calendar extruded materials between a set of rollers as described in US-A-5800647. However, despite the purported improvements offered by these methods, it remains the case that for any given extruder, there is a need to optimize the ratio between the diameter of the ram/screw and the width of die. Thus, the width of extruded sheet is curtailed by extruder and the corresponding die's size. Thus, it remains problematic to make relatively large sheets. Further, extrusion methods require a specific amount of mixture to fill the extruder before production of any sheet may begin, and moreover, a complete cleaning of the extruder is necessary if the composition is changed.

WO-A-03049935 describes a method of producing inorganic sheet with PTFE resin by rolling without pre-extrusion. However, it was found to be difficult to obtain a homogeneous layer of a non-resin formulation with such equipment. Another example to produce inorganically filled organic polymer sheets directly by rolling is described in US-A-2005508072. However, this method is not concerned with the manufacture of sintered materials.

US 2 917 821 discloses a method for making a metal sheet, wherein metal powders are passed through at least one pair of indented rollers and subsequently through at least one pair of finishing rollers.

Thus, there is a need for large inorganic sheets, particularly, sintered ceramic sheets, and novel methods and machinery for making them.

### SUMMARY OF THE INVENTION

In accordance with a first aspect of the present invention, there is provided a method for making a sintered ceramic sheet with the features of appended claim 1.

In accordance with a second aspect of the present disclosure, the method may also comprise heating the dried ceramic sheet at a suitable temperature to combust organic additives prior to sintering.

In accordance with a third aspect of the present disclosure, there is provided a method for making a multilayered ceramic composite, said method comprising:
a method according to the first aspect of the present invention in which the sheet-forming composition is a ceramic precursor composition; and further comprising either the steps of:
   (a1) drying the ceramic sheet to form a green ceramic sheet;
   (b1) stacking said green ceramic sheet with a like sheet(s) or a sheet(s) having a different composition to form a green laminated product, and
   (c1) sintering said green laminated product at a suitable temperature for form a multilayered ceramic composite; OR
   (a2) stacking the ceramic sheet with a like sheet(s) or a sheet(s) having a difference different composition to form a laminated product;
   (b2) drying the laminated product to form a green laminated product; and
   (c2) sintering said green laminated product at a suitable temperature to form a multilayered ceramic composite sintering;
   optionally wherein in either method, the dried ceramic sheet or laminated product is heated at a suitable temperature to combust organic additives prior to sintering.

In accordance with a fifth aspect of the present disclosure, there is provided an apparatus configured to carry out a method according to any one of the first, second and third aspects of the present disclosure, said apparatus comprising a pair of indented rollers and at least one pair of finishing rollers positioned downstream from the pair of indented rollers.

In accordance with a sixth aspect of the present disclosure, there is provided an inorganic sheet or ceramic sheet obtainable by the method of any one of the first, second and third aspects of the present disclosure.

In accordance with a seventh aspect of the present disclosure, there is provided a green inorganic sheet, or green ceramic sheet, or green laminated product obtainable by the method of any one of the first, second and third aspects of the present disclosure.

In accordance with an eighth aspect of the present disclosure, there is provided a sintered ceramic sheet or sintered multilayered ceramic composite obtainable by the method of any one of the second and third aspects of the present disclosure.

### BRIEF DESCRIPTION OF THE DRAWINGS

Figure 1 is a schematic depiction of one illustrative embodiment of the present invention.
Figure 2 is a graphical representation of the firing cycle used in the Examples.
Figure 3 is a graph showing mechanical properties for a series of samples prepared in the Examples.
Figure 4 is a schematic depiction of a further illustrative embodiment of the present disclosure.

### DETAILED DESCRIPTION OF THE INVENTION

The terms "board" and "sheet" are used herein merely to differentiate between the body formed after the composition is passed through the (first) pair of indented rollers and the downstream finishing rollers. It will be understood that a board has sheet like properties, e.g., a substantially planar form having a width/length scale significantly greater than its thickness. Thus, in embodiments in which the at least one pair of finishing rollers is a pair of smoothing rollers, the difference between any board and sheet formed in the same process is that the sheet will have a smoother outer surface and/or a reduced thickness compared to the board from which it is formed.

As used herein, the terms "inorganic board" or "inorganic sheet" mean that the board and sheet are formed from a sheet-forming composition comprising a major amount of inorganic particulate material, e.g., greater than about 50 % by weight inorganic particulate material, or at least about 60 % by weight inorganic particulate material, based on the total weight of the sheet-forming composition.

As used herein, the term "green" referring, for example, to an inorganic or ceramic sheet or multilayered ceramic composite, means a body in an unfired state. The body, e.g., sheet or multilayered composite, may be formed by sintering a ceramic precursor composition as defined herein.

Unless otherwise stated, the mean (average) equivalent particle diameter (d₅₀ value) referred to herein is as measured in a well known manner by laser light scattering of the particulate material in a fully dispersed condition in an aqueous medium using a LA950 machine as supplied by Horiba, referred to herein as a "Horiba LA950 unit". Such a machine provides measurements and a plot of the cumulative percentage by volume of particles having a size, referred to in the art as the 'equivalent spherical diameter' (esd), less than given esd values. The mean particle size d₅₀ is the value determined in this way of the particle esd at which there are 50% by volume of the particles which have an equivalent spherical diameter less than that d₅₀ value. Likewise, d₉₀ is the value determined in this way of the particle esd at which there are 90% by volume of the particles which have an equivalent spherical diameter less than that d₉₀ value. Likewise, d₁₀ is the value determined in this way of the particle esd at which there are 10 % by volume of the particles which have an equivalent spherical diameter less than that d₁₀ value.

The "total weight" of the sheet-forming composition comprising inorganic particulate material refers to the total weight of any compounds discussed herein to be suitable to be used in the sheet-forming composition, i.e., the total weight of the intermetallic, metallic and/or ceramic precursor compounds and compositions and the organic additives such as fibre, binder, plasticizer, lubricant, etc. The "total weight" is thus understood to include such organic additives that are liquid under ambient conditions, but it does not include solvent, e.g., water in aqueous solutions of such compounds and compositions if such are used to prepare the sheet-forming composition.

Unless otherwise stated, the terms "weight %" or "wt. %, or "by weight" are based on the total weight of the sheet-forming composition comprising inorganic particulate material.

As used herein, the term "width of a roller" means the dimension of the roller parallel its central axis. As used herein, the term "diameter of a roller" means the largest, straight-line, cross-sectional dimension of the roller perpendicular to its central axis. As used herein, the term "depth of indentation" means the distance (along a radius of the roller) between an outer circumference of the roller, which is tangential with respect to the outermost surface of a segment/protrusion, and an inner circumference of the roller. The inner circumference is a circumference of an indented roller which is located at the surface of the roller from which the segments/protrusions extend or protrude.

As used herein, the term "ceramic precursor composition" means a composition which comprises materials which may be intimately mixed and milled, optionally in the presence of a liquid medium (e.g. water), formed into a ceramic sheet, and fired (e.g., at a temperature of at least about 800°C) to form a ceramic article, for example, a multilayered ceramic composite or a porcelain tile. The materials typically comprise a mixture of inorganic minerals, clays and processing aids, such as sintering aids, fibres (organic and/or inorganic), binding agents, lubricants, plasticizers and dispersant/deflocculant.

As used herein, the term "inner sheet" means an inorganic sheet (e.g., ceramic sheet) which is sandwiched between at least two adjacent inorganic sheets (e.g., ceramic sheets). Thus, in a three layer sintered ceramic composite, for example, the inner sheet is the middle layer sandwiched between two outer layers.

### Methodology

In accordance with the first aspect of the present invention, the sheet-forming composition is passed through at least one pair of indented rollers forming an inorganic board. The inorganic board is then passed through at least one pair of finishing rollers, forming an inorganic sheet. In certain embodiments, the inorganic board is passed through at least one pair of smoothing rollers to smoothen and/or reduce the thickness of the board.

By "indented" is meant that the radial distance between the central axis and the outer facing surface of the roller varies about the central axis of the roller. The indented roller may have a series of raised segments and/or protrusions about its surface. The protrusions may be spaced regularly or irregularly about the surface of the roller. The protrusion may have the form of a cube, cuboid, cone, frustrum cone, pyramid (triangular or square-based), cylinder, dome (e.g., half-sphere), domed cylinder, triangular prism, or hexagonal prism. The raised segments may traverse laterally (i.e., axially) along the surface and may be continuous or discontinuous. In embodiment, the raised segment or segments traverse laterally (i.e., axially) along the surface of the roller. The raised segment or segments may traverse part of the way along the width of the roller, or extend approximately all of the way along the width of the roller. There may be a plurality of spaced apart raised segments. For example, there may be between about 5 and about 40 spaced apart raised segments, for example, from about 5 to about 30, or from about 5 to about 25, or from about 10 to about 20 spaced apart raised segments. The spacing between adjacent raised segments may be equal or unequal, preferably equal. The plurality of raised segments may be orientated such that each segment is substantially parallel to an adjacent segment. Each of the plurality of raised segments may follow a substantially linear path along the width of the roller or may traverse about the roller in a coiled, spiral, helical, or screw-shaped arrangement. Advantageously, the pattern of indentation will be the same for each pair of rollers. Viewed in cross-section (in an axial direction) the profile of the segment or segments may be angular or curved. For example, the profile of the segment of segments may be approximately, triangular, square, rectangular or otherwise polygonal. Use of the term 'approximately' in this context is intend to reflect that that the profile is not a regular polygon since one of its edges will be the rounded surface of the roller. The corners of the polygonal profile may be rounded. In an advantageous embodiment, the profile of each segment is curved, approximately U-shaped, and a plurality of such segments will form an undulating profile about the circumference of the roller, e.g., a series of alternating U-shapes and inverted U-shapes.

Without wishing to be bound by theory, it is believed that the use of at least one pair of indented rollers in the initial board forming step has an advantageous compacting effect, producing board and, thus, sheet having desirable mechanical integrity, e.g., increased resistance to tearing and hole-formation. This means larger board and sheet may be produced than otherwise would be the case using conventional methods in the art. This, in turn, may facilitate further processing of the sheet, e.g., shaping, cutting, stamping, stacking to form a laminate, with the sheet less prone to damage or failure. In ceramic applications, the compacting effect using at least one pair of indented rollers has also been found to enhance the mechanical properties of the final sintered ceramic. A further advantage is that the methods and apparatus of the present invention do not require an extrusion step and associated extruding machinery.

The indented and finishing rollers may be made of any suitable material, including but not limited to, cast iron, stainless steel and any suitably robust polymeric material, e.g., rubber. Advantageously, the rollers are made of stainless steel. Any of the rollers may be surface treated to modify (e.g., reduce) adhesion and/or abrasion of the sheet-forming mixture to the surface of the rollers. For stainless steel rollers, surface treatment includes treatment with Cr or Ni which will decrease adhesion and/or abrasion of the sheet-forming mixture to the surface of the rollers. In other embodiments, the rollers could be heated to facilitate sheet formation. Heat may be supplied by a heating element positioned within the body of the roller, for example, a heated mandrel. Alternatively, the rollers may be located in a heating zone.

In an embodiment, the method includes one pair of indented rollers followed by two or more pairs of finishing rollers (e.g., smoothing rollers). In another embodiment, the method includes two pairs of indented rollers, followed by at least one or two or more pairs of finishing rollers (e.g., smoothing rollers). In embodiments comprising multiple pairs of indented rollers and/or multiple pairs of finishing rollers (e.g., smoothing rollers), the distance between rollers in any one pair may be arranged such that the thickness of the board and then sheet is gradually reduced as it passes through the rollers.

In another embodiment, the board forming and/or sheet forming steps may be performed in reduced atmosphere conditions, for example, under vacuum conditions. Thus, in these embodiments, the rollers of the apparatus may be housed in a sealed section of the apparatus providing said reduced atmosphere conditions or vacuum conditions.

The sheet-forming composition may be fed to the pair of indented rollers using any suitable delivery means. For example, the sheet-forming composition may be fed to the pair of indented rollers from a hopper situated above or proximate to the pair of indented rollers. In an embodiment, a sheet-forming composition is continuously fed to the pair of indented rollers and the process, overall, is a continuous process in which inorganic sheet is continually exiting or drawn from the final pair of finishing rollers (e.g., smoothing rollers).

Upon exiting the (final) pair of finishing rollers (e.g., smoothing rollers), the inorganic sheet may be passed to a further processing zone for further processing. Further processing of the inorganic sheet may comprise sizing, e.g., cutting and/or stamping, and/or stacking into a laminated product with like sheets or sheets of different composition, and/or drying the inorganic sheet and/or a heating the inorganic sheet to combust organic additives. The method further comprises sintering the inorganic sheet in a firing zone, wherein the inorganic sheet is a ceramic sheet, i.e., comprised of ceramic precursor materials.

Thus, according to the present invention, in which a sintered ceramic sheet is made, the method of the first aspect further comprises drying the ceramic sheet to form a green ceramic sheet, and sintering said green ceramic sheet at a suitable temperature to form a sintered ceramic sheet.

Drying may be conducted at a temperature of at least about 40°C, e.g., about 70°C, or about 105°C, and fired at a suitable temperature for a suitable time to form a fired ceramic body. Drying may be carried out in a drying chamber. The drying and firing conditions will vary depending the ceramic processing conditions composition, forming, size of green body and nature of equipments. Firing may be conducted in any suitable oven or kiln.
During drying the ceramic sheet may be placed between plates to reduce or negate deformation of the sheet. For example, the ceramic sheet may be placed between gypsum plates at about 40°C during drying.

Alternatively, drying may be effected using far infrared radiation or heated rollers. If using heated rollers, care should be taken to use pressures which do not cause further reduction in the thickness of the inorganic/ceramic sheet.

Suitable firing temperatures include temperatures above about 800°C, for example, the firing may be conducted at a temperature of at least 900°C, for example, at least about 1000°C, or at least about 1100°C, or at least about 1200°C, or at least 1250°C, or at least about 1300°C, or at least about 1350°C, or at least about 1400°C, or at least about 1450°C, or at least about 1500°C, or at least about 1550°C, or at least about 1600°C, or at least about 1650°C, or at least about 1700°C. The firing temperature may be less than about 1800° C, for example, less than about 1700°C, or less than about 1600°C, or less than about 1500°C, or, less than about 1450°C, or less than about 1300°C, or less than about 1250°C, or less than about 1200°C.

In certain embodiments, the green ceramic sheet may be heated at a suitable temperature to combust organic additives prior to firing. The green ceramic object may be heated at a temperature between about 200°C and 600°C, for example, between about 200° and about 500°C, or between about 200°C and 400°C.

Firing time may be between about 5 hours and 48 hours, for example, from about 10 hours to about 36 hours, for example, from about 10 hours to about 24 hours. In certain embodiments, a relatively slow heating rate may be used during initial heating, e.g., between about 0.5 and 5°C per minute, until the temperature has reached about 500-700°C. Firing at higher temperatures, e.g., above about 500-700°C may employ a faster heating rate, e.g., between 10 and 50°C per minute until the maximum firing temperature is obtained. There may be a dwell time at the maximum firing temperature, e.g., from about 1 to about 60 minutes, typically less than about 30 minutes, or less than about 20 minutes, or less than about 10 minutes, followed by a cooling cycle. The cooling may be natural or controlled.

Further, in accordance with a third aspect, in which a sintered multilayered ceramic composite is made, the method of the first aspect further comprises either the steps of:
(a1) drying the ceramic sheet to form a green ceramic sheet;
(b1) stacking said green ceramic sheet with a like sheet(s) or a sheet(s) having a different composition to form a green laminated product, and
(c1) sintering said green laminated product at a suitable temperature for form a multilayered ceramic composite; OR
(a2) stacking the ceramic sheet with a like sheet(s) or a sheet(s) having a difference composition to form a laminated product;
(b2) drying the laminated product to form a green laminated product; and
(c2) sintering said green laminated product at a suitable temperature to form a multilayered ceramic composite sintering.

Drying and firing protocols are as above for the second aspect of the present disclosure.

The formation of the laminated product may comprise pressing, e.g., rolling the laminated product before and/or after drying and prior to heating (when carried out) and sintered.

In embodiments of the first, second and third aspects, sheet-forming composition, the inorganic sheet, green ceramic sheet or green laminated product may aged for a suitable period of time prior to sintering. In an advantageous embodiment, the organic additives comprise a hydrolysable component (as described above), and aging is carried out for a suitable period of time and under suitable conditions such that the hydrolysable component is hydrolysed prior to sintering. Aging may increase the cohesion of the sheet-forming composition, which, in turn, may facilitate the sheet forming process. In certain embodiments, the sheet-forming composition is aged prior to sheet forming. For example, the sheet-forming composition may be dried and/or aged for a suitable period of time, e.g., up to about 24 hours, or up to about 18 hours, or up to about 12 hours. In certain embodiments, the sheet or laminated product may be dried and/or aged for a suitable period of time, e.g., up to about 24 hours, or up to about 18 hours, or up to about 12 hours.

In a further embodiment of the first, second or third aspect of the present disclosure the method further comprise preparing the sheet-forming composition comprising inorganic particulate material. The sheet-forming composition and methods of its preparation are discussed below.

### Sheet-forming composition comprising inorganic particulate material

In an embodiment, the sheet-forming composition comprising inorganic particulate material comprises from about 60-100 wt. % inorganic particulate material, and from 0-40 wt. % organic additives, based on the total weight of the sheet-forming composition (excluding solvent, e.g., water). The sheets formed by the process are not suitable for human or animal consumption. Generally, the organic additives are used to control or modify the processibility of the sheet-forming composition as well as properties of the green sheet; the inorganic particulate material will mainly condition the final properties of the dried and/or fired sheets.

The sheet-forming composition may comprise from about 60-99 wt. % inorganic particulate material and from about 1-40 wt % organic additives, for example, from about 65-99 wt. % inorganic particulate material and from about 1-35 wt. % organic additives, for example, from about 70-99 wt. % inorganic particulate material and from about 1-30 wt. % organic additives, or from about 75 -95 wt. % inorganic particulate material and from about 5-25 wt. % organic additives, or from about 80-95 wt. % inorganic particulate material and from about 5-15 wt. % organic additives.

In certain embodiments, the sheet-forming composition comprising inorganic particulate material has a composition which, following preparing of said inorganic sheet is suitable for use in the field of electronic components, e.g., an electrode, electronic component support, filtration, proppants, composite for ballistic protection devices, catalyst support, heat exchange devices, refractory applications, e.g., ceramic articles such as tableware, tiles, heavy clay articles and solid counter-tops, refractory linings, etc, as surface finishing material, e.g., for decorative purposes, or as an element in 3D prototyping.

According to the present invention, the inorganic particulate material is a ceramic precursor material. The inorganic particulate material may also be selected from the group consisting of metals, intermetallic compounds, and combinations thereof, which are not part of the present invention.

Suitable metals include, but are not limited to, aluminium, silicon, alkali metals, alkaline earth metals, transition metals, and p-block metals.

Suitable ceramic precursor materials include, but are not limited, alumina, aluminosilicate, nepheline syenite, feldspar, talc, mica, quartz, silica, titania, zirconia, zirconia silicate, wollastonite, perlite, diatomaceous earth, an alkaline earth metal carbonate or sulphate, such as calcium carbonate, magnesium carbonate, dolomite, and gypsum, a carbide such as silicon carbide, boron carbide, tungsten carbide and titanium carbide, boron nitride, a silicide such as nickel silicide, sodium silicide, magnesium silicide, platinum silicide, titanium silicide, tungsten silicide, graphite, other carbon based ceramic precursor materials, and combinations thereof.

The aluminosilicate may be one or more of andalusite, kyanite, sillimanite, mullite, molochite, a hydrous kandite clay such as kaolin, illite, halloysite or ball clay, or an anhydrous (calcined) kandite clay such as metakaolin or fully calcined kaolin.

The alumina may be selected from one or more of fused alumina (e.g., corundum), sintered alumina, calcined alumina, reactive or semi-reactive alumina, bauxite, and calcined chamotte having an alumina content.

According to the invention, the sheet-forming composition comprising inorganic particulate material is a ceramic precursor composition. In embodiment, the ceramic precursor composition is suitable for forming ceramic tiles therefrom, for example, stoneware or earthenware tiles, for example, porcelain tiles.

In certain embodiments, the ceramic precursor composition comprises raw materials which are suitable to form a ceramic tile, for example, a porcelain tile therefrom. In certain embodiments, the ceramic precursor composition comprises: from about 5 to about 50 % by weight ball clay, for example, from about 10 to about 40 % by weight ball clay, or from about 15 to about 30 % by weight ball clay, based on the total dry weight of the ceramic precursor composition; up to about 50 % by weight kaolin, for example, from about 10 to about 40 % by weight kaolin, or from about 15 to about 30 % by weight kaolin, based on the total dry weight of the ceramic precursor composition; up to about 50 % by weight quartz, for example, from about 1 to about 30% by weight quart, or from about 5 to about 20 % by weight quartz, or from about 5 to about 15 % by weight quartz; and from about 20 to about 70 % by weight feldspar and/or nepheline syenite, for example, from about 40 to about 70 % by weight feldspar and/or nepheline syenite, based on the total dry weight of the ceramic precursor composition. The feldspar may be an alkali feldspar, for example, sodium feldspar, potassium feldspar, or combinations thereof. The ceramic precursor composition may further comprise up to about 30 % by weight of silica sand/and or feldspathic sand. In certain embodiments, the ceramic precursor composition comprises from about 40-60 % by weight ball clay, from about 5-15 % by weight quartz, and from about 30-70 % by weight feldspar and/or nepheline syenite, for example, from about 10-20 % by weight potassium feldspar, and from about 40-50 % by weight sodium feldspar.

In certain embodiments, the inorganic particulate components of the sheet-forming composition comprises particles having a particular particle size distribution. As described below, the inorganic particulate components of the sheet-forming composition may have a d₅₀ of from about 0.1 to µm about 500 µm, for example, from about 0.1 µm to about 250 µm, or from about 0.1 µm to about 100 µm, or from about 0.1 µm to about 50 µm, or from about 0.1 µm to about 25 µm, or from about 0.5 to about 10 µm, or from about 0.5 µm to about 8 µm, or from about 1 µm to about 6 µm, or from about 1 µm to about 5 µm. It will be understood by person skilled in the art that the size of the particles in the sheet-forming composition may influence the thinness (or thickness) of the inorganic sheet obtainable therefrom.

In certain embodiments, the inorganic particulate of the sheet-forming composition may comprise particles of varying morphology. For example, components of the inorganic particulate may be in the form of powder, or an aggregate, or comprise plate-like particles, or whiskers, or substantially rounded particles, or pointed and/or angular particles, or blocky particles, or mixtures thereof.

Because the components of the sheet-forming composition may have different particle size ranges, the sheet-forming composition may have a bimodal or multimodal particle size distribution. In other embodiments, particle size ranges of components may be selected such that the sheet-forming composition has a monomodal particle size distribution. In further embodiments, the sheet-forming composition may be subjected to size classification step, for example, by milling or sieving, prior to sheet forming, to homogenize the mixture particle size distribution, e.g., milling to obtain a sheet-forming composition having a monomodal particle size distribution, as described below.

In certain embodiments, the sheet-forming composition comprises from about 0.1 to about 20 wt. % inorganic fibres (based on the total weight of the sheet-forming composition). Since these additives are inorganic the amount of inorganic fibres, when present, should be treated as making up part of the inorganic particulate material. The sheet-forming composition may comprise from about 0.1-15 wt. % inorganic fibres, for example, from about 1-10 wt. % inorganic fibres, or from about 2-9 wt. %, or from about 2-8 wt. %, or from about 3- 7 wt. % inorganic fibres. The inorganic fibre may be of natural or synthetic origin. The inorganic fibre may be one or more of carbon fibre, glass fibre, metal fibre (e.g., boron fibre), silica fibre, silicon carbide fibre and ceramic fibre. For the purposes of this invention, carbon fibre is treated as an inorganic fibre, since it shares many qualities with the other inorganic fibres listed above.

Carbon fibres can be produced through heat treatment and pyrolysis of different polymeric precursors such as rayon, polyacrylonitrile, aromatic polyamide and phenolic resin, or may be produced from the bottoms of petroleum or tar distillation, e.g., pitch or tar residue.

Ceramic fibres are typically derived from materials such as boron, silica, carbide species, alumina and/or zirconia.

Boron fibres may be obtained through deposition of boron microgranules on a tungsten or carbonate yarn.

Suitable organic additives are many and various and include, but are not limited, to organic fibre, binding agents, auxiliant (e.g., plasticizer, glidants, lubricants, and the like), dispersant and/or deflocculant.

The organic additives that may be used in the present invention are all commercially available from various sources known to the skilled person in the art.

In certain embodiments, the sheet-forming composition comprises from about 0.1 to about 20 wt. % organic fibre (based on the total weight of the sheet-forming composition). The sheet-forming composition may comprise from about 0.1-15 wt. % organic fibres, for example, from about 1-10 wt. % organic fibres, or from about 2-9 wt. %, or from about 2-8 wt. %, or from about 3- 7 wt. % organic fibres. The fibre may be of natural or synthetic origin. For example, the sheet-forming composition may comprise deciduous fibre and/or resinous fibre. Deciduous fibres are relatively short in length compared to resinous fibres. For example, the deciduous fibre may have a mean length of less than about 1 mm. The resinous fibre may have a mean length of greater than about 1 mm, for example, a mean length of greater than about 1.5 mm. Organic fibres include, but are not limited to, polypropylene, polyacrylonitrile or polyvinylalcohol fibres, natural fibres derived from any suitable source, such as coconuts, wood, grasses (e.g., sugarcane, bamboo) textile waste, cotton, hemp, flax or linen, and combinations thereof. Fibre mean length, also referred to as fibre average length, may be determined in accordance with the methods described in 'A comparative study of two automated techniques for measuring fiber length', M. M. Figueiredo et at., Tappi Journal, Vol. 80, No. 2, p137. In one embodiment, the fibre mean length is a length-weighted average. In another embodiment, the fibre length is a weight-weighted average. The mean fibre length may be determined in accordance with the Kajaani FS-200 (indirect) method or the Galai CIS-100 (direct visual) method.

The use of fibres, either inorganic, organic or both, may improve the strength of the green sheets during the processing and sheet-forming steps. Further, any inorganic fibre present in the sheet-forming composition may enhance the mechanical strength of sintered sheets.

In certain embodiments, the organic additives comprise one or more binding agents selected from the group consisting of, methyl cellulose (MC), hydroxymethylpropyl cellulose (HEMC), carboxy methyl cellulose (CMC, polyvinyl butyrals, emulsified acrylates, polyvinyl alcohols (PVOH), polyvinyl pyrrolidones, polyacrylics, starch, silicon binders, polyacrylates, silicates, polyethylene imine, lignosulfonates, and alginates. The binding agents can be present in a total amount between about 0.1 wt. % and about 10 wt. %, or between about 0.2 wt. % and about 8 wt. %, or between about 0.2 wt. % and about 5 wt. %, or between about 0.5 wt. % and about 3 wt. % (based on the total weight of the sheet-forming composition). In embodiment, the binder comprises or is a hydrolysable binder, for example, a cellulose ether binder such as, for example, methyl cellulose, hydroxymethylpropyl cellulose and/or carboxy methyl cellulose, optionally in combination with a polyvinyl alcohol.

In a further embodiment, the sheet-forming composition comprises one or more mineral binders. Suitable mineral binder may be selected from the group including, but not limited to, one or more of bentonite, aluminum phosphate, boehmite, sodium silicates, boron silicates, or mixtures thereof. Since these additives are inorganic the amount of mineral binder, when present, should be treated as making up part of the inorganic particulate material.

In certain embodiments, the organic additives comprise one or more auxiliants (e.g. plasticizers and lubricants) selected from the group consisting of polyethylene glycols (PEGs), glycerol, glycerine, ethylene glycol, octyl phthalates, stearates such as ammonium stearate, wax emulsions, oleic acid, Manhattan fish oil, stearic acid, wax, palmitic acid, linoleic acid, myristic acid, and lauric acid. The auxiliants can be present in a total amount between 0.5 wt. % and 15 wt. % (based on the total weight of the sheet-forming composition), for example, between about 1 wt. % and about 10 wt. %, or between about 1 wt. % and 5 wt. %, or between about 1 wt. % and 3 wt. %.

In certain embodiments, the organic additives comprise one or more dispersants selected from the group consisting of sulfonated naphthalene formaldehyde condensate (SNFC), polyelectrolytes such as polyacrylates and copolymers containing polyacrylate species, especially polyacrylate salts (e.g., sodium and aluminium optionally with a group II metal salt), sodium hexametaphosphates, non-ionic polyol, polyphosphoric acid, condensed sodium phosphate, non-ionic surfactants, alkanolamine and other reagents commonly used for this function. The dispersant may, for example, be selected from conventional dispersant materials commonly used in the processing and grinding of inorganic particulate materials. Such dispersants will be well recognised by those skilled in this art. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g., polymetaphosphate salts [general form of the sodium salts: (NaPO₃)ₓ] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000. The dispersant may be present in an amount up to about 5 wt. %, for example, up to about 2 wt. %, for example, from about 0.1 to about 2 wt. %, or from about 0.5 to 1.5 wt. %.

The sheet-forming composition, which is a ceramic precursor composition, may further comprise a deflocculating agent. Deflocculating agents that may be used in the present invention are commercially available from various sources known to the person skilled in the art. Examples for deflocculating agents suitable for the purposes of the present invention include, but are not limited to, sodium tripolyphosphate (STPP), sodium hexametaphosphate (HMP), sodium silicate, and sodium polyacrylate, which are typically used in the range of 0.001 wt. % to 5.0 wt. %, based on the total weight of the sheet-forming composition, for example, in the range of 0.001 wt. % to about 3.0 wt. %, or from about 0.001 to about 1.0 wt. %, or from about 0.001 to about 0.1 wt. %.

In a further embodiment, the method of the first, second and/or third aspects of the present disclosure may further include a step of preparing the sheet-forming composition.

The sheet-forming composition may be provided in any form which is suitable for being fed to the pair of indented rollers and processed in accordance with the methods described herein. For example, the sheet-forming composition may be of a granular form or a mouldable mixture, e.g., having a paste-like consistency.

The sheet-forming composition may be prepared by combining inorganic particulate material, organic additives and optional solvent, typically water, in the appropriate amounts and mixing for a suitable period of time to obtain said sheet-forming composition. Mixing may be carried out in any suitable mixing apparatus, for example, a Z-arm mixer or an Eirich mixer, optionally under reduced atmosphere conditions, for example, under vacuum conditions. In an embodiment, the preparation of the sheet-forming composition may be carried out under vacuum conditions, for example, mixing is performed under vacuum conditions.

In certain embodiments, raw inorganic particulate material, which may be a mixture of raw inorganic particulate materials, is subjected to a sizing step, e.g., milling/grinding/sieving to obtain a sized inorganic particulate having a desired particle size distribution, before combining with organic additives. For, example, raw inorganic particulate materials may be combined and milled in a mill, for example, a ball mill, in dry conditions or in a liquid medium, e.g., water. The milling may be carried out for a suitable period of time sufficient to obtain the desired particle size distribution. A person of skill in the art will understand that the duration of milling will depend on a number of processing parameters such as, for example, the type of mill, energy input, amount of raw materials and the desired particle size distribution. In certain embodiments, the raw inorganic particulate materials are milled to obtain a sized inorganic particulate having a d₅₀ of from about 0.1 to µm about 500 µm, for example, from about 0.1 µm to about 250 µm, or from about 0.1 µm to about 100 µm, or from about 0.1 µm to about 50 µm, or from about 0.1 µm to about 25 µm, or from about 0.5 to about 10 µm, or from about 0.5 µm to about 8 µm, or from about 1 µm to about 6 µm, or from about 1 µm to about 5 µm.

The organic additives may be added to the sized inorganic particulate material in any order or at the same time. Typically, in embodiments in which more than one type of organic additives is added, the additives are added gradually in different stages. Alternatively, in other embodiments, some or all of the organic additives may be combined with the solvent, e.g., water, and then mixed in to the sized inorganic particulate material. For example, in an embodiment, the sized inorganic particulate material is combined with binder, for example, a hydrolysable binder, and then mixed for a period of time, e.g., from about 1 to about 60 minutes. Separately, dispersant may be dissolved in the solvent, preferably water, by mixing for a suitable period of time (e.g., from about 1-30 minutes), followed by addition of organic fibre, and then further mixing (e.g., from about 1-60 minutes). Auxiliants such as a plasticizer or lubricant may be added to the dispersion of organic fibres by mixing for a suitable period of time (e.g., from about 1-30 minutes). An appropriate amount of the dispersion of organic fibre and auxiliant may then be mixed with the sized inorganic particulate and binder to obtain a sheet-forming composition have the desired form, e.g., a granular form or a mouldable mixture.

In embodiments in which the binder comprises or is a hydrolysable binder, the sheet-forming composition may be aged for a suitable period of time such that the hydrolysable binder is hydrolysed, at least partially or wholly. A suitable period of time may be up to about 24 hours, or up to about 18 hours, or up to about 12 hours. As discussed below, the aging process may be carried after inorganic sheet formation.

During preparation of the sheet-forming composition, the inorganic particulate materials and organic additives may be combined with an amount of solvent. Advantageously, the solvent is water. The amount of solvent, e.g., water, may be from about 1 wt. % to about 50 wt. %, based on the total weight of the sheet-forming composition, for example, from about 6-50 wt. %, or from about 8-50 wt. %, or from about 5-45 wt. %, or from about 10-40 wt. %, or from about 15-35 wt. %, or from about 20-35 wt. %, or from about 25-35 wt. % of water may be added during preparation of the sheet-forming composition.

Further aspects of the methods of the present disclosure are discussed below in connection with the apparatus of the fourth aspect of the present disclosure.

### Apparatus

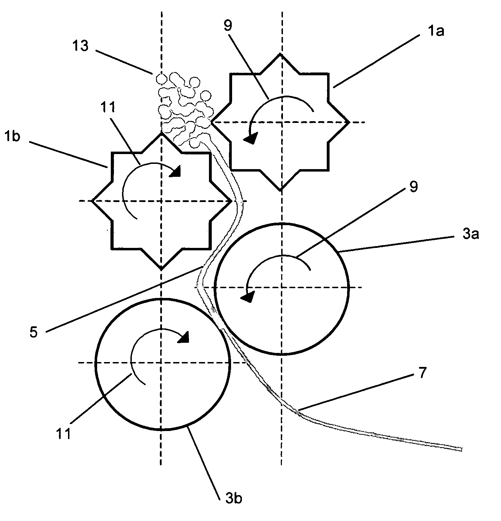

In a fourth aspect, there is provided an apparatus configured to carry out the method of the first aspect of the present invention, said apparatus comprising a pair of indented rollers and at least one pair of finishing rollers (e.g., smoothing rollers), wherein said at least one pair of finishing rollers (e.g., smoothing rollers) is downstream from the pair of indented rollers. The pairs of rollers may be housed in any suitable housing means, for example, a jig, which may be fixed to a surface, for example, a bench and the like. The housing means may comprise supports for each roller. The rollers may be permanently fixed to the support or may be detachably coupled to the support. Advantageously, the rollers are detachably coupled to the support allowing the relative position of the rollers to be changed depending on, for example, the desired thickness of inorganic sheet. As noted above, the finishing rollers (e.g., smoothing rollers) are positioned downstream from the indented rollers. In one embodiment, the indented rollers are positioned above the finishing rollers (e.g., smoothing rollers), i.e., the central axis of each of the indented rollers is positioned in a horizontal plane which lies above the central axis of each of the smoothing rollers. One advantageous arrangement is depicted schematically in Figure 1, in which the indented rollers (1 a, 1 b) and smoothing rollers (3a, 3b) are orientated in a staggered arrangement. In this advantageous embodiment, sheet-forming composition (13) is fed to the indented rollers (1 a, 1 b) and the inorganic board (5) formed in the indented rollers (1 a, 1 b) is fed to smoothing rollers (3a, 3b) with the aid of gravity. This means a separate conveying means between the pairs of rollers is not necessary. In a further embodiment, the central axis of each roller is located on a different horizontal plane (indicated in Fig. 1 by horizontal dashed lines passing through the central axis of rollers 1 a, 1 b, 3a and 3b), with the proviso that the central axis of each of the smoothing rollers is below the central axis of the lowermost indented roller. The central axis of the uppermost indented roller may be on the same vertical plane (indicated in Fig. 1 by a vertical dashed line passing through the central axis of rollers 1 a and 3a) as the central axis of the uppermost smoothing roller. Similarly, the central axis of the lowermost indented roller may be on the same vertical plane (indicated in Fig. 1 by a vertical dashed line passing through the central axis of rollers 1 b and 3b) of the lowermost smoothing. Any other suitable arrangements are contemplated. For example, the pair of indented rollers and the at least one pair of finishing rollers (e.g., smoothing rollers) may be positioned substantially in the same horizontal plane. In this arrangement, separate conveying means, for example, a conveyor belt, may be required to support the inorganic board as it exits the indented rollers and passed to the finishing rollers (e.g., smoothing rollers). In certain embodiments, the central axes of at least one of the pairs of rollers i.e., indented and/or finishing rollers, is parallel. In other embodiments, the central axes of at least one of the pairs of rollers, i.e., indented and/or finishing rollers, is not parallel.

In other embodiments, there may be at least two pairs of indented rollers upstream from the at least one pair of finishing rollers (e.g., smoothing rollers). In such embodiments, the at least two pairs of indented rollers may be positioned substantially in the same horizontal plane. Alternatively, the at least two pairs of indented rollers may be positioned in different horizontal planes, for example, a first pair of indented rollers may be positioned above a second pair of indented rollers. As described above, the central axes of at least one of the pairs of indented rollers may be parallel or not parallel (i.e., convergent or divergent). In certain embodiments comprising at least two pairs of indented rollers, the central axes of both rollers in each pair are orientated in a non-parallel arrangement. In such an embodiment, the first pair of indent rollers may have central axes which converge in the opposite sense to the central axes of the rollers in the second pair of indented rollers. Such an arrangement may ensure that the inorganic board exiting the second pair of indented rollers has a uniform thickness. Note that in Figure 1 the smoothing rollers could be a pair of finishing rollers other than smoothing rollers, as described below.

In certain embodiments, the at least one pair of finishing rollers is a pair of smoothing rollers. In other words, the sheet formed in the process will have a smoother outer surface and/or a reduced thickness compared to the board from which it is formed. As described herein, there may be more than one pair of smoothing rollers. For example, there may be two pairs of smoothing rollers, or three pairs of smoothing rollers.

In certain embodiments, the at least on pair of finishing rollers comprises rollers having a surface which imparts a regular surface pattern to the inorganic board as it passes through the at least one pair of finishing rollers. The regular surface pattern may be, for example, a pattern of corrugation, or a pattern of dimples, or holes, or pinpricks, or lines (e.g., cross-hatch, or criss-cross), or indents of a selected shape (e.g., rounded, spherical, spheroidal, oval, triangular, square, rectangular, diamond-shaped, pentagonal, hexagonal, octagonal, star-shaped, or any other regular or non-regular shape), and the like. Thus, analogous to the situation in which a 'positive' mould is used to prepare a 'negative' moulded piece therefrom, the surface of the rollers of the at least one pair of finishing rollers may be the 'positive' of the 'negative' surface pattern imparted to the inorganic board. In certain embodiments, the at least one pair of finishing rollers is a pair of indented rollers, as described herein. In certain embodiments, the at least one pair of finishing rollers may comprise a smoothing roller and a roller which imparts a regular surface pattern to the inorganic board. This enables sheet to be formed in which only one surface has a regular surface pattern.

The rollers in each pair will act in an opposing rotational direction (as indicated by curved arrows 9 and 11 in Fig. 1). The indented rollers will preferably be arranged such that upon rotation, and at the point at which the distance between the inner circumference of each roller is a at a minimum, the segment/protrusion of one roller is proximate an area of the other roller which is not a segment/protrusion. As noted above, each of the pair of indented rollers will preferably have an identical pattern of indentation. The distance between each pair of rollers may be adjusted to obtain to the desired thickness of board and/or sheet. The distance may be adjusted such that the inorganic board exiting the indented rollers has a thickness of between about 0.1 and 50 mm, for example, between about 0.1 and 45 mm, or between about 0.5 and 40 mm, or between about 0.5 and 35 mm, or between about 0.5 and 30 mm, or between about 0.5 and 25 mm, or between about 0.5 and 20 mm, or between about 0.5 and 15 mm, or between about 0.5 and 10 mm, or between about 0.5 and 8.0 mm, or between about 0.5 and 7.0 mm, or between about 0.5 and 6.0 mm, or between about 0.5 and 5.0 mm, or between about 0.5 and 4 mm, or between about 0.5 and 3.5 mm, or between about 0.5 and 3.0 mm, or between about 1.0 and 3.0 mm. Similarly, the distance between the at least one pair of smoothing rollers may be adjusted such that the inorganic sheet exiting the smoothing rollers has a thickness of between about 0.1 and 50 mm, for example, between about 0.1 and 45 mm, or between about 0.5 and 40 mm, or between about 0.5 and 35 mm, or between about 0.5 and 30 mm, or between about 0.5 and 25 mm, or between about 0.5 and 20 mm, or between about 0.5 and 15 mm, or between about 0.5 and 10 mm, or between about 0.5 and 8.0 mm, or between about 0.5 and 7.0 mm, or between about 0.5 and 6.0 mm, or between about 0.5 and 5.0 mm, or between about 0.5 and 4.0 mm, or between about 0.5 and 3.5 mm, or between about 0.5 and 3.0 mm, or between about 1.0 and 3.0 mm, with the proviso in some embodiments that the thickness of the inorganic sheet is less than the thickness of the inorganic board.

The diameter of the rollers may be any suitable diameter. Typically, the diameter of the rollers may be between about 100 and 3000 mm, for example, between about 100 and 2500 mm, or between about 100 and 2000 mm, or between about 100 and 1500 mm, or between about 100 and 1000 mm, or between about 100 and 750 mm, or between about 100 and 500 mm, or between about 150 and 400 mm, or between about 200 and about 350 mm, or between about 200 and 300 mm, or between about 200 and 250 mm.

The at least one pair of indented rollers advantageously has a depth of indentation which is consistent about the circumference of the each roller. Typically, each roller in any pair has the same depth of indentation. In certain embodiments, the depth of indentation is from about 10-100 mm, for example, from about 10-80 mm, or from about 10-60 mm, or from about 10-50 mm, or from about 10-40 mm, or from about 10-30 mm, or from about 10-20 mm.

In embodiments in which there is more than one pair of indented rollers, the depth of indentation of one pair of indented rollers may be the same as, or different compared to, the depth of indentation of the other pair(s) of indented rollers. For example, the first pair of indented rollers (i.e., the pair of rollers into which the sheet-forming composition is fed) may have a depth of indentation which is greater than a subsequent pair of indented rollers. The depth of indentation of the first pair of rollers may be up to about 5 % greater than the depth of indentation of the subsequent pair of rollers, for example, up to about 10 % greater, or up to about 15 % greater, or up to about 20 % greater, or up to about 25 % greater than the depth of indentation of the subsequent pair of indented rollers.

Advantageously, the finishing rollers (e.g., smoothing rollers) will be of a comparable size to the indented rollers, i.e., the same width and the same largest cross-sectional dimension. Similarly, the speed of rotation of each pair of rollers will be adjusted so that inorganic board and inorganic sheet travel through the apparatus at a consistent speed, i.e., to avoid adverse stretching or compression of the inorganic board as it passes from the indented rollers to the finishing rollers (e.g., smoothing rollers) and beyond.

In an embodiment, the smoothing rollers are calendering rollers.

Upon exiting the at least one pair of a finishing rollers (e.g., smoothing rollers), the inorganic sheet (7) may be passed to a further processing zone (not shown).

The further processing zone may comprise a sizing zone and/or a sheet stacking zone and/or a drying zone for drying the inorganic sheet and/or a heating zone for heating the inorganic sheet to combust organic additives.

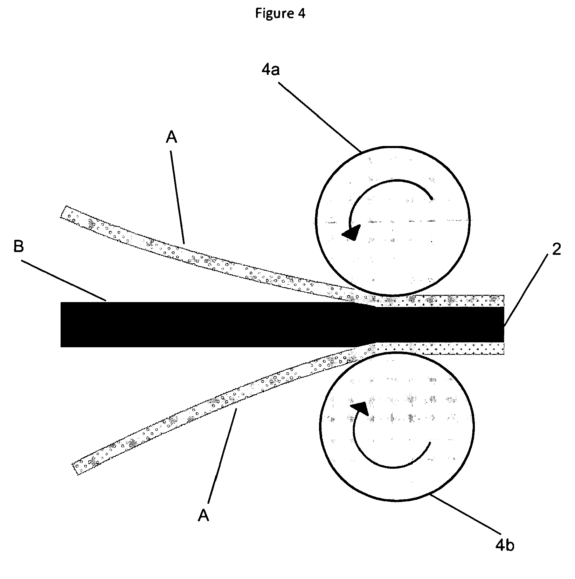

Further processing may include sizing the inorganic sheet, e.g., by cutting or stamping. The inorganic sheet may be cut into sections of a desired size and then stacked with like sheets or sheets having a different composition to form a laminated product and then sintered to form a multilayered ceramic composite. The laminated product may be formed by pressing the stacked sheets, e.g., between a pair of rollers, with or without adhesive between each layer of sheet. An illustrative embodiment of the manufacture of a three-layer laminated product is depicted in Figure 4. The laminated product (2) is formed by rolling using a pair of rollers (4a, 4b) and pressing two like inorganic sheets (A) either side of a different inorganic sheet (B) formed from a different sheet-forming composition comprising inorganic particulate material.. Thus, it is seen that the laminated product is stacked in an A/B/A arrangement. Sheets A may have a coefficient of thermal expansion (CTE) which is lower than the CTE of B. Sheets A and B may have any suitable thickness. Sheet B may be thicker than either of sheets A. Alternatively, each of sheets A may be thicker than sheet B. The ratio of the thickness of B to the total thickness of A/B/A, i.e., B:(A/B/A) may be from about 0.5-1.5. The laminating process may be conducted such that the thickness ratio B:(A/B/A) does not change. Typically, in a laminated product, the thickness of any one sheet will be less than about 50 mm, for example, less than about 35 mm, or less than about 20 mm, or less than about 15 mm, or less than about 10 mm, or less than about 8 mm, or less than about 6 mm.

The further processing zone or zones may be an integral part of the apparatus, or may be detachably engaged to, or otherwise in communication with, the apparatus. There be a sheet conveying means between the exit of the smoothing rollers and the further processing zones, for example, a conveyor belt. The may be further conveying means between further processing zones. The conveyance of inorganic sheet from the exit of the smoothing rollers to and through the various further processing zones may be automated (e.g., computed controlled) or manually operated or by a combination of automation and manual control/operation.

The apparatus may further comprise, be detachably engaged to, or otherwise in communication with a firing zone for sintering a green inorganic sheet or a green laminated product formed from a green inorganic sheet, for example, a green ceramic sheet. The firing zone may comprise an oven or kiln suitable for firing the ceramic sheets or laminated products described herein to obtain sintered articles. Suitable ovens and kilns will be readily apparent to the skilled person.

The apparatus may further comprise delivery means for feeding the sheet-forming composition comprising inorganic particulate material to the pair of indented rollers. For example, the sheet-forming composition may be fed to the pair of indented rollers from a hopper situated above or proximate to the pair of indented rollers. In an embodiment, a sheet-forming composition is continuously fed to the pair of indented rollers and the process, overall, is a continuous process in which inorganic sheet is continually exiting or drawn from the final pair of smoothing rollers.

At any stage following during inorganic sheet formation, the sheet-forming composition or sheet formed therefrom may be dried and/or aged for a suitable period of time, e.g., up to about 24 hours, or up to about 18 hours, or up to about 12 hours. Advantageously, the sheet-forming composition is aged before being fed to the sheet-forming apparatus.

In ceramic sheet forming applications, the inorganic sheet, also referred to as a green inorganic sheet or green ceramic sheet, is sintered at suitable temperature to form a ceramic sheet. In the manufacture of a multilayered ceramic composite, the laminate is typically made up from green ceramic sheets, pressed and then sintered at a suitable temperature, as described above in connection with the first, second and third aspects of the present invention.

The laminated product (and hence the sintered multilayered ceramic composite formed therefrom) may comprise at least two, for example, at least about 3 or more sheets, at least one of which, and preferably all of which, are inorganic sheets made in accordance with the present disclosure. An illustrated embodiment is depicted in Fig. 4 and described above. The sheets may have the same or different compositions; that is to say, the sheets may be formed from the same or different sheet-forming composition. For example, in one embodiment, the laminated product is to be fired to form a sintered multilayered ceramic composite, in which case the ceramic sheets may have variable mechanical and/or thermomechanical properties. For example, the sheets may have variable coefficient of thermal expansion (CTE). In one embodiment, the sintered multilayered ceramic composite has three layers and is formed from a laminated product comprising three inorganic sheets. The inner sheet may have a CTE which is higher than a CTE of adjacent outer ceramic sheets (as measured at 800°C by dilatometry according to DIN 51045).

In further embodiments, the inorganic sheets or ceramic sheets formed in accordance with the present disclosure will have a width of at least about 100 mm, for example, at least about 200 mm, or at least about 300 mm, or at least about 400 mm, or at least about 500 mm, or at least about 600 mm, or at least about 700 mm, or at least about 800 mm, or at least about 1000 mm. The inorganic sheets or ceramic sheets may have a width of less than about 3000 mm, for example, less than about 2500 mm, or less than about 2000 mm, or less than about 1500 mm. The inorganic sheets may have a length of a from about 200 to about 10,000 mm, for example, a length of least about 500 mm, for example, at least about 1000 mm, or at least about 1500 mm, or at least about 2000 mm, or at least about 2500 mm, or at least about 3000 mm, or at least about 3500 mm, or at least about 4000 mm or at least about, 4500 mm, or at least about 5000 m, or at least about 5500 mm, or at least about 6000 mm, or at least about 6500 mm, or at least about 7000 mm, or at least about 7500 mm, or at least about 8000 mm, or at least about 8500, or at least about 9000 mm, or at least about 9500 mm. In a continuous process, it will be understood that there may be no limit on the length of the inorganic sheet produced.

In further embodiments, the green dried ceramic sheets formed in accordance with the method of the present invention may be characterized as having desirable mechanical properties. For example, green dried ceramic sheet obtainable by the method of the present invention may have a flexion of greater than about 1.0 mm, for example, greater than about 1.5 mm, or greater than about 2.0 mm, or greater than about 3.0 mm, or greater than about 3.5 mm, or greater than about 4.0 mm, or greater than about 4. 5 mm, or greater than about 5.0 mm, or greater than about 7.0 mm, or greater than about 9.0 mm, or greater than about 11.0 mm, or greater than about 13.0 mm, or greater than about 15.0 mm. Alternatively or additionally, a green dried ceramic sheet obtainable by the method of the present invention may have a Bending Strength of at least about 3 MPa, for example, at least about 5 MPa, or at least about 10 MPa, or at least about 15 MPa, or at least about 20 MPa, or at least about 25 MPa. In certain embodiments, the Bending Strength is no greater than about 50 MPa, for example, no greater than about 40 MPa, or no greater than about 30 MPa, or no greater than about 25 MPa. In certain embodiments, the Bending Strength is from about 3 MPa to about 20 MPa, for example, from about 3 to about 15 MPa, or from about 4 to about 15 MPa, or from about 5 to about 15 MPa.

Bending Strength and Flexion may be determined using a 3-point bending strength test in accordance with the following method: five green rectangular samples of the green ceramic having dimensions of 100mm (length) x 20mm (width) x 2mm (thickness) have their flexural strength and flexion measured through a three-point bending test using a Zwick Roell Z030. The support span (L) is 50mm and the loading rate applied is 0.5mm/min. The test is automatically stopped when cracks start to appear across the surface of each sample and the applied force decreased. After cracking, the width and the thickness of the specimens are measured as close as possible to the cracking point. These values, together with the break force and the support span are used to calculate the Bending Strength. Flexion is the maximum deflection (mm) of the centre of sample.

For the avoidance of doubt, the present application is directed to the subject-matter described in the following numbered paragraphs:
1. A method for making an inorganic sheet, said method comprising: passing a sheet-forming composition comprising a major amount of inorganic particulate material through at least one pair of indented rollers forming an inorganic board; and passing said inorganic board through at least one pair of finishing rollers, thereby forming an inorganic sheet.
2. The method of paragraph 1, wherein each of indented rollers has a series of raised segments and/or protrusions about its surface.
3. The method of paragraph 2, wherein the raised segments traverse laterally along the surface of the roller, optionally wherein the raised segments extend approximately all of the way along the width of the roller.
4. The method of paragraphs 1, 2 or 3, wherein there are a plurality of spaced apart raised segments, optionally wherein the spacing between adjacent segments is equal.
5. The method of any one of paragraphs 2-4, wherein the plurality of raised segments are oriented such that each raised segment is substantially parallel to an adjacent segment, optionally wherein each of the plurality of raised segments follows a substantially liner path along the width of the roller.
6. The method of any preceding numbered paragraph, wherein the finishing rollers are smoothing rollers, for example, calendering rollers.
7. The method of any one of paragraphs 1-5, wherein the finishing rollers comprise a roller or rollers having a surface which imparts a regular surface pattern to the inorganic board as it passes through the at least one pair of finishing rollers.
8. The method of any preceding numbered paragraph, wherein the sheet-forming composition comprises: from about 60 about 100 wt. % inorganic particulate material, and from about 0 to about 40 % organic additives.
9. The method of paragraph 8, wherein the sheet-forming composition comprises inorganic and/or organic fibres.
10. The method of paragraph 8 or 9, wherein the sheet-forming composition further comprises up to about 40 % by weight solvent, based on the total weight of the sheet-forming composition, optionally wherein the solvent is water.
11. The method of paragraphs 8, 9 or 10, wherein the sheet-forming composition is a ceramic precursor composition, for example, a porcelain tile precursor composition, or a heavy clay, or a porcelain aluminous ceramic precursor composition, or a alumina-zircon containing composition, or a magnesium silicate composition, such as steatite and/or cordierite.
12. The method according to any preceding numbered paragraph, wherein the sheet-forming composition is aged for a suitable period of time prior to sheet-forming.
13. A method for making a sintered ceramic sheet, said method comprising:
   a method according to paragraph 11 or 12; and further comprising:
      drying the ceramic sheet to form a green ceramic sheet, and
      sintering said green ceramic sheet at a suitable temperature to form a sintered ceramic sheet;
      optionally wherein the method comprises heating the dried ceramic sheet at a suitable temperature to combust organic additives prior to sintering.
14. A method for making a multilayered ceramic composite, said method comprising:
   a method according to paragraph 11 or 12; and further comprising either the steps of:
      (a1) drying the ceramic sheet to form a green ceramic sheet;
      (b1) stacking said green ceramic sheet with a like sheet(s) or a sheet(s) having a different composition to form a green laminated product, and
      (c1) sintering said green laminated product at a suitable temperature for form a multilayered ceramic composite; OR
      (a2) stacking the ceramic sheet with a like sheet(s) or a sheet(s) having a different composition to form a laminated product;
      (b2) drying the laminated product to form a green laminated product; and
      (c2) sintering said green laminated product at a suitable temperature to form a multilayered ceramic composite sintering;
   optionally wherein in either method, the dried ceramic sheet or laminated product is heated at a suitable temperature to combust organic additives prior to sintering.
15. The method of paragraph 14, wherein formation of the laminated product comprising pressing, e.g., rolling the laminated product before and/or after drying and prior to heating (when carried out) and sintering.
16. The method of any preceding numbered paragraph, wherein the inorganic sheet, green ceramic sheet or green laminated product is aged for a suitable period of time prior to sintering.
17. The method of paragraph 16, wherein the organic additives comprise a hydrolysable component, and aging is carried out for a suitable period of time and under suitable conditions such that the hydrolysable component is hydrolysed prior to sintering.
18. The method according to any preceding numbered paragraph, further comprising a step of preparing the sheet-forming composition comprising inorganic particulate material.
19. The method according to any preceding numbered paragraph, wherein preparation of the sheet-forming composition and/or the sheet-forming process is carried out under vacuum conditions.
20. An apparatus configured to carry out a method according to any one of paragraphs 1-19, said apparatus comprising a pair of indented rollers and at least one pair of finishing rollers positioned downstream from the pair of indented rollers, optionally wherein the indented rollers are as defined in any one of claims 2-5 and optionally wherein the finishing rollers are smoothing rollers.
21. The apparatus of paragraph 20 wherein said apparatus comprises a housing with supports for said rollers, optionally wherein the rollers are detachably coupled to the supports.
22. The apparatus of paragraph 20 or 21, wherein said apparatus further comprises, or is detachably engaged to, or is otherwise in communication with, a further processing zone for further processing inorganic sheet exiting the at least one pair of finishing rollers, optionally wherein there is a sheet conveying means between the exit of the finishing rollers and the further processing zone.
23. The apparatus of paragraph 22, wherein said further processing zone comprises a sizing zone and/or a sheet stacking zone and/or a drying zone for drying the inorganic sheet and/or a heating zone for heating the inorganic sheet to combust organic additives.
24. The apparatus of any one of paragraphs 20-23, wherein said apparatus further comprises, or is detachably engaged to, or is otherwise in communication with, a firing zone for sintering a green inorganic sheet or a green laminated product formed from a green inorganic sheet, optionally wherein the green inorganic sheet is a green ceramic sheet.
25. The apparatus of any one of paragraphs 20 to 24, further comprising delivery means for feeding the sheet-forming composition comprising inorganic particulate material to the pair of indented rollers.
26. The apparatus of any one of paragraphs 20-26, wherein the at least one pair of finishing rollers comprise a roller or rollers having a surface which imparts a regular surface pattern to the inorganic board as it passes through the at least one pair of finishing rollers
27. An inorganic sheet or ceramic sheet obtainable by the method of any one of paragraphs 1-19.
28. A green inorganic sheet, or green ceramic sheet, or green laminated product obtainable by the method of any one of paragraphs 1-19.
29. A sintered ceramic sheet or sintered multilayered ceramic composite obtainable by the method of any paragraphs 13-19.
30. The sintered multilayered ceramic composite according to paragraph 29, wherein said composite is formed from at least three green ceramic sheets, optionally wherein an inner sheet of the composite has a coefficient of thermal expansion (CTE) higher than a CTE of adjacent outer ceramic sheets.

### EXAMPLES

### Example 1

A series sheets were prepared in accordance with the following procedures. Table 1 details the composition from which the inorganic sheets were prepared (samples 1-5). Each composition comprised about 90 wt. % inorganic particulate. A comparative sheet was prepared by pressing a spray dried powder (sample 6).

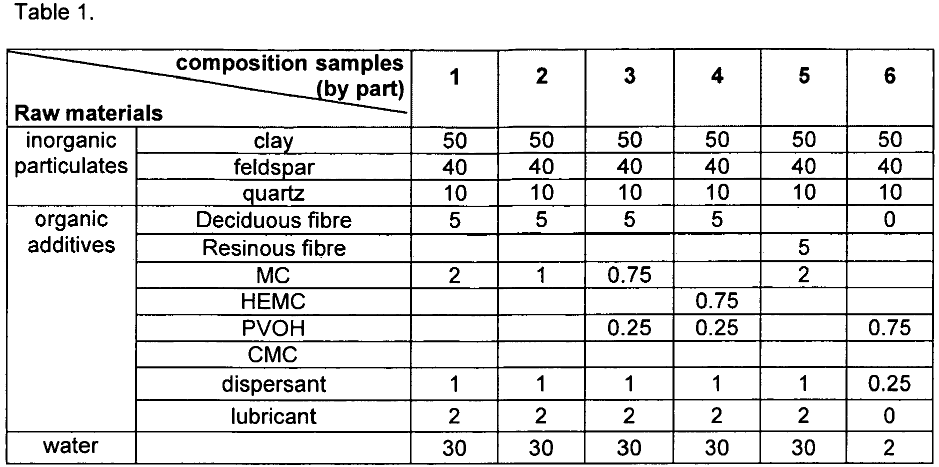

The inorganic particulate materials were milled to obtain a particle size distribution having a d₅₀ of 5 µm. The milled material was then combined with the other components and water in a Z-arm mixer. Each mixture was aged overnight until the binder was completely hydrolysed.

The resulting mixtures were continuously fed between indented rollers to form compact board followed by normal rollers to produce an inorganic sheet. The rollers had diameter of 240 mm and length of 600 mm. They were made of stainless steel. The thickness of as formed sheet varied between 0.1 mm and 10mm.

The inorganic sheets were dried between gypsum plates to avoid any deformation.

### Properties of as prepared inorganic sheets

Drying shrinkage was about 4% for all inorganic sheets prepared by the inventive method and <1% for compared sample prepared by powder pressing. The green density was about 1.6 g/cm³ for inventive samples and 1.75 g/cm³ for comparative sample.

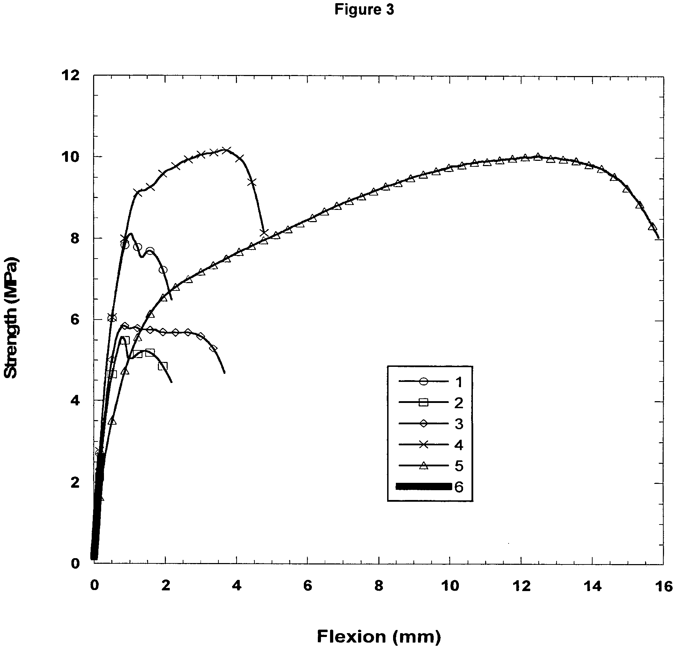

Bending Strength and Flexion (determined in accordance with the method described above) for all of samples 1-6 is shown in Fig. 3. As can be seen from Fig. 3, the strength of samples 1-5 was at least about 100 % greater compared to a sheet formed by pressing in the conventional manner. With regard to flexion, the ceramic sheets prepared in accordance with the present invention had capacity of deflection at least 20 times (e.g., sample 1) greater than a conventional pressed body (sample 6).

### Comparative Example 2

To illustrate the beneficial effect of indented rollers in compact inorganic board formation, one of prepared mixtures 1-5 was also directly fed into a pair of normal rollers without indented surface. It was found that, even with optimisation of processing conditions such as increase of rolling pressure, of water and/or binder contents, a continuous compact inorganic board could not be formed. Defects (holes, tearing) across the as prepared board were numerous and could only be partly eliminated by repeated folding and cross rolling.

### Example 3

Immediately after forming and before drying, green inorganic sheets prepared in accordance with the present disclosure were also used as an element to form a multilayer composite by lamination. The lamination was carried out at room temperature without any intermediate adhesive between inorganic sheets. The laminated product consisted of three sheet in an A/B/A arrangement. The composition of each sheet is given in Table 2. Sample A and Sample B have the same organic additives, but the inorganic particulate recipe of Sample A was varied from that of Sample B in order to create sheets having a different coefficient of thermal expansion. The thickness of the green sheets was 0.5 mm for sheet A and 4 mm for sheet B. The ratio of B:(A/B/A) was the same before and after lamination.

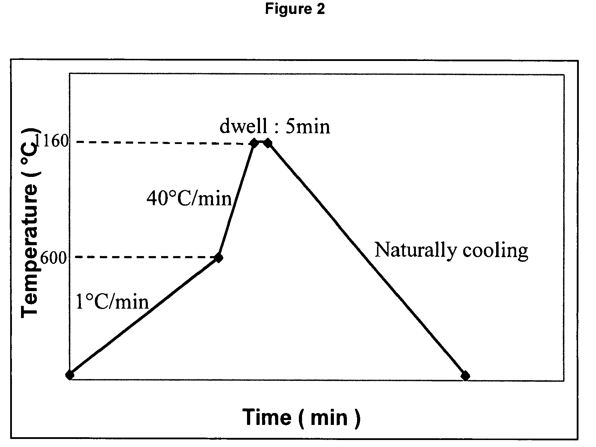

The laminated product were then dried in accordance with protocol described in Example 1. The laminated products were then sintered with a predetermined cycle to produce a solid and rigid body. The sintering conditions varied according to the inorganic sheet composition, size of green body and desired final properties. A relatively slow heating rate was use for all inorganic sheets to eliminate the organic additives at beginning of firing cycle. The firing cycle is presented in Fig. 2.

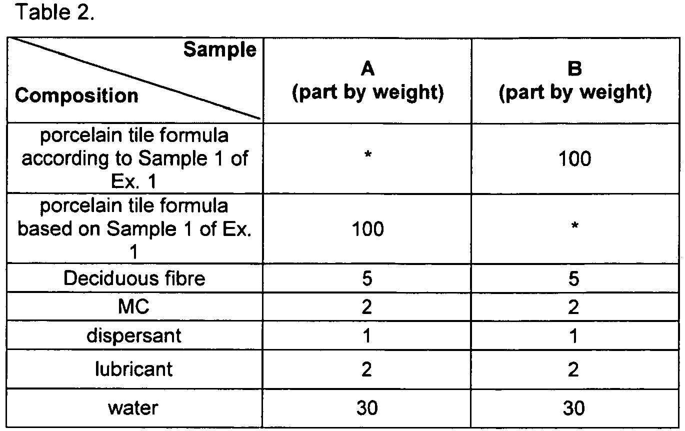

Various physical properties of the sintered multilayered ceramic composite are given in Table 3.

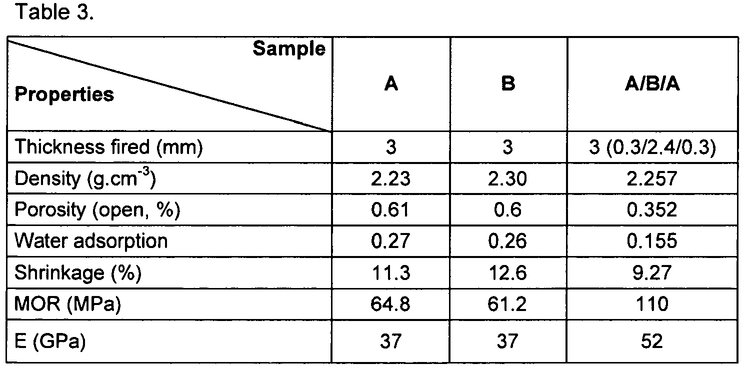

### Example 4

Alumina based ceramic sheets were prepared from the following mixture - detailed in Table 4 - using the procedure described in Example 1.

**Table 4.**

| **Composition** | **quantity (part by weight)** |
|---|---|
| alumina | 100 |
| fibre | 5 |
| binder | 2 |
| dispersant | 1 |
| lubricant | 2 |
| water | 25 |

The as prepared sheets were then fired to 1600°C. The fired sheets have a density of 3.06g/cm³ and a 3-point bending strength of 180 MPa.

## Claims

1. A method for making a sintered ceramic sheet, said method comprising: passing a sheet-forming composition comprising a major amount of inorganic particulate material through at least one pair of indented rollers forming an inorganic board; and passing said inorganic board through at least one pair of finishing rollers, thereby forming a ceramic sheet, wherein the sheet-forming composition is a ceramic precursor composition comprising inorganic and/or organic fibres, and wherein the method further comprises drying the ceramic sheet to form a green ceramic sheet, and sintering said green ceramic sheet at a suitable temperature to form a sintered ceramic sheet.

2. The method of claim 1, wherein each of indented rollers has a series of raised segments and/or protrusions about its surface.

3. The method of claim 2, wherein the raised segments traverse laterally along the surface of the roller, optionally wherein the raised segments extend approximately all of the way along the width of the roller.

4. The method of any preceding claim, wherein the finishing rollers are smoothing rollers, for example, calendering rollers.

5. The method of any one of claims 1-3, wherein the finishing rollers comprise a roller or rollers having a surface which imparts a regular surface pattern to the inorganic board as it passes through the at least one pair of finishing rollers.

6. The method of any preceding claim, wherein the sheet-forming composition comprises: from about 60 about 100 wt. % inorganic particulate material, and from about 0 to about 40 % organic additives.

7. The method of claim 6, wherein the ceramic precursor composition is a porcelain tile precursor composition, or a heavy clay, or a porcelain aluminous ceramic precursor composition, or a alumina-zircon containing composition, or a magnesium silicate composition, such as steatite and/or cordierite.

8. The method according to any preceding claim, wherein the sheet-forming composition is aged for a suitable period of time prior to sheet-forming.

9. A method for making a sintered ceramic sheet, said method comprising:
a method according to claim 7 or 8; and further comprising:
heating the dried ceramic sheet at a suitable temperature to combust organic additives prior to sintering.

10. A method for making a multilayered ceramic composite, said method comprising:
a method according to claim 7 or 8; and further comprising either the steps of:
(a1) drying the ceramic sheet to form a green ceramic sheet;
(b1) stacking said green ceramic sheet with a like sheet(s) or a sheet(s) having a different composition to form a green laminated product, and
(c1) sintering said green laminated product at a suitable temperature for form a multilayered ceramic composite; OR
(a2) stacking the ceramic sheet with a like sheet(s) or a sheet(s) having a different composition to form a laminated product;
(b2) drying the laminated product to form a green laminated product; and
(c2) sintering said green laminated product at a suitable temperature to form a multilayered ceramic composite sintering;
optionally wherein in either method, the dried ceramic sheet or laminated product is heated at a suitable temperature to combust organic additives prior to sintering.

11. The method according to any preceding claim, wherein preparation of the sheet-forming composition and/or the sheet-forming process is carried out under vacuum conditions.

12. The method according to any preceding claim, wherein the ceramic precursor composition comprises: (i) from 0.1 to 20 wt. % organic fibre, based on the total weight of the ceramic precursor composition; or (ii) from 0.1 to 20 wt. % inorganic fibres, based on the total weight of the ceramic precursor composition.

## Patentansprüche

1. Herstellungsverfahren für ein gesintertes Keramikplättchen, das Verfahren umfassend Durchschicken einer Plättchen bildenden Zusammensetzung, umfassend eine größere Menge eines anorganischen teilchenförmigen Materials, durch mindestens ein Paar gekerbte Walzen zum Bilden eines anorganischen Bretts; und Durchschicken des anorganischen Bretts durch mindestens ein Paar Endbearbeitungswalzen, um so ein Keramikplättchen zu bilden, wobei die Plättchen bildende Zusammensetzung eine keramische Vorläuferzusammensetzung ist, umfassend anorganische und/oder organische Fasern, und wobei das Verfahren zudem umfasst Trocknen des Keramikplättchens zum Bilden eines Keramikplättchen-Grünlings, und Sintern des Keramikplättchen-Grünlings bei einer geeigneten Temperatur zum Bilden eines gesinterten Keramikplättchens.

2. Verfahren gemäß Anspruch 1, wobei jede der gekerbten Walzen eine Reihe erhöhter Segmente und/oder Vertiefungen um ihre Oberfläche aufweist.

3. Verfahren gemäß Anspruch 2, wobei die erhöhten Segmente sich lateral entlang der Oberfläche der Walze verteilen, wahlweise wobei die erhöhten Segmente sich ungefähr entlang der gesamten Breite der Walze erstrecken.

4. Verfahren gemäß irgendeinem vorhergehenden Anspruch, wobei die Endbearbeitungswalzen glättende Walzen sind, zum Beispiel Kalandrierwalzen.

5. Verfahren gemäß irgendeinem der Ansprüche 1 bis 3, wobei die Endbearbeitungswalzen eine oder mehrere Walzen umfassen mit einer Oberfläche, die dem anorganischen Brett ein regelmäßiges Oberflächenmuster geben, wenn es das mindestens eine Paar Endbearbeitungswalzen durchläuft.

6. Verfahren gemäß irgendeinem vorhergehenden Anspruch, wobei die Plättchen bildende Zusammensetzung von etwa 60 bis etwa 100 Gew.-% anorganisches teilchenförmiges Material umfasst und von etwa 0 bis etwa 40 % organische Zusätze.

7. Verfahren gemäß Anspruch 6, wobei die keramische Vorläuferzusammensetzung eine Porzellanfliesen-Vorläuferzusammensetzung ist, oder ein schwerer Ton, oder eine porzellantonerdehaltige keramische Vorläuferzusammensetzung, oder eine aluminiumoxydzirkonhaltige Zusammensetzung, oder eine Magnesiumsilicatzusammensetzung, wie Steatit und/oder Cordierit.

8. Verfahren gemäß irgendeinem vorhergehenden Anspruch, wobei die Plättchen bildende Zusammensetzung während eines geeigneten Zeitraums vor der Plättchenbildung gereift wird.

9. Herstellungsverfahren für ein gesintertes Keramikplättchen, das Verfahren umfassend
ein Verfahren gemäß Anspruch 7 oder 8; und zudem umfassend
Erhitzen des getrockneten Keramikplättchens zu einer geeigneten Temperatur zum Verbrennen von organischen Zusätzen vor dem Sintern.

10. Herstellungsverfahren für einen mehrschichtigen keramischen Verbundstoff, das Verfahren umfassend
ein Verfahren gemäß Anspruch 7 oder 8; und zudem umfassend irgendeinen der Schritte
(a1) Trocknen des Keramikplättchens zum Bilden eines Keramikplättchen-Grünlings;
(b1) Schichten des Keramikplättchen-Grünlings mit einem oder mehreren ähnlichen Plättchen oder einem oder mehreren Plättchen mit einer unterschiedlichen Zusammensetzung zum Bilden eines laminierten Grünling-Produkts, und
(c1) Sintern des laminierten Grünling-Produkts bei einer geeigneten Temperatur zum Bilden eines mehrschichtigen keramischen Verbundstoffs; ODER
(a2) Schichten des Keramikplättchens mit einem oder mehreren ähnlichen Plättchen oder einem oder mehreren Plättchen mit einer unterschiedlichen Zusammensetzung zum Bilden eines laminierten Produkts;
(b2) Trocknen des laminierten Produkts zum Bilden eines laminierten Grünling-Produkts; und
(c2) Sintern des laminierten Grünling-Produkts bei einer geeigneten Temperatur zum Bilden eines mehrschichtigen gesinterten keramischen Verbundstoffs;
wahlweise wobei in jedem Verfahren das getrocknete Keramikplättchen oder laminierte Produkt bei einer geeigneten Temperatur erhitzt wird zum Verbrennen von organischen Zusätzen vor dem Sintern.

11. Verfahren gemäß irgendeinem vorhergehenden Anspruch, wobei Herstellung der Plättchen bildenden Zusammensetzung und/oder das Plättchen bildende Verfahren unter Luftausschluss erfolgt.

12. Verfahren gemäß irgendeinem vorhergehenden Anspruch, wobei die keramische Vorläuferzusammensetzung umfasst (i) von 0,1 bis 20 Gew.-% organische Fasern, auf der Basis des Gesamtgewichts der keramischen Vorläuferzusammensetzung; oder (ii) von 0,1 bis 20 Gew.-% anorganische Fasern, auf der Basis des Gesamtgewichts der keramischen Vorläuferzusammensetzung.

## Revendications

1. Un procédé destiné à la fabrication d'une feuille de céramique frittée, ledit procédé comprenant : le passage d'une composition formant une feuille comprenant une quantité majeure de matériau particulaire inorganique à travers au moins une paire de rouleaux dentelés formant un panneau inorganique ; et le passage dudit panneau inorganique à travers au moins une paire de rouleaux de finition, ce qui permet de former une composition formant une feuille, dans laquelle la composition formant une feuille est une composition de précurseur de céramique comprenant des fibres inorganiques et/ou organiques et dans laquelle le procédé comprend en outre le séchage des feuilles de céramique pour former une feuille de céramique crue et le frittage de ladite feuille de céramique crue à une température convenable pour former une feuille de céramique frittée.

2. Le procédé de la revendication 1, dans lequel chacun des rouleaux dentelés présente une série de segments surélevés et/ou de saillies sur sa surface.

3. Le procédé de la revendication 2, dans lequel les segments surélevés traversent latéralement le long de la surface du rouleau, dans lequel éventuellement les segments surélevés s'étendent approximativement sur tout le trajet le long de la largeur du rouleau.

4. Le procédé de l'une quelconque des revendications précédentes, dans lequel les rouleaux de finition sont des rouleaux de lissage, par exemple, des rouleaux de calandrage.

5. Le procédé de l'une quelconque des revendications 1 à 3, dans lequel les rouleaux de finition comprennent un ou des rouleaux présentant une surface qui confère un motif de surface régulier au panneau inorganique lorsqu'il passe à travers la ou les paires de rouleaux de finition.

6. Le procédé de l'une quelconque des revendications précédentes, dans lequel la composition formant une feuille comprend : d'environ 60 à environ 100 % en poids de matériau particulaire inorganique et d'environ 0 à environ 40 % d'additifs organiques.

7. Le procédé de la revendication 6, dans lequel la composition de précurseur de céramique est une composition de précurseur de grès porcelainé ou une argile lourde ou un précurseur de céramique alumineuse de porcelaine ou une composition contenant de l'alumine-zircon ou une composition de silicate de magnésium, telle que la stéatite et/ou la cordiérite.

8. Le procédé selon l'une quelconque des revendications précédentes, dans lequel la composition formant une feuille est vieillie pendant une période de temps convenable avant le formage de la feuille.

9. Un procédé destiné à la fabrication une feuille de céramique frittée, ledit procédé comprenant :
un procédé selon la revendication 7 ou 8 ; et comprenant en outre :
le chauffage de la feuille de céramique séchée à une température convenable pour brûler les additifs organiques avant le frittage.

10. Un procédé destiné à la fabrication d'un composite en céramique multicouche, ledit procédé comprenant : un procédé selon la revendication 7 ou 8 ; et comprenant en outre les étapes suivantes, soit :
(a1) le séchage des feuilles en céramique pour former une feuille de céramique crue ;
(b1) l'empilement de ladite feuille de céramique crue avec une ou des feuille(s) similaires ou une ou des feuilles présentant une composition différente pour former un produit stratifié cru, et
(c1) le frittage dudit produit stratifié cru à une température convenable pour former un composite en céramique multicouche ; OU
(a2) l'empilement des feuilles de céramique avec une ou des feuille(s) similaires ou une ou des feuilles présentant une composition différente pour former un produit stratifié ;
(b2) le séchage du produit stratifié pour former un produit stratifié cru ; et
(c2) le frittage dudit produit laminé cru à une température convenable pour former un frittage de composite de céramique multicouche ;
éventuellement dans lequel dans l'un ou l'autre procédé, la feuille de céramique séchée ou le produit stratifié est chauffé à une température convenable pour brûler les additifs organiques avant le frittage.

11. Le procédé selon l'une quelconque des revendications précédentes, dans lequel la préparation de la composition formant une feuille et/ou le traitement de formage de feuille sont effectués sous des conditions de vide.

12. Le procédé selon l'une quelconque des revendications précédentes, dans lequel la composition de précurseur de céramique comprend : (i) de 0,1 à 20 % en poids de fibres organiques, en fonction du poids total de la composition de précurseur de céramique ; ou (ii) de 0,1 à 20 % en poids de fibres inorganiques, en fonction du poids total de la composition de précurseur de céramique.
